# EUROPEAN PATENT APPLICATION

(11) **EP 2 472 886 A2**
(43) Date of publication of application: **04.07.2012**
(21) Application number: 11188912.7
(22) Date of filing: 11.11.2011
(51) Int. Cl.: H04N 13/04

(54) **3D display apparatus and system**

(30) Priority: 15.03.2011 KR 20110023049; 04.01.2011 US 429548 P
(71) Applicant: Samsung Electronics Co., Ltd., Suwon-si, Gyeonggi-do 442-742 (KR)
(72) Inventor: Seo, Je-Hwan, Daegu (KR); Jung, do-sung, Gyeonggi-do (KR); Kang, Yong-jin, Gyeonggi-do (KR); Hwang, Tae-don, Gyeonggi-do (KR)
(74) Representative: Fearnside, Andrew Simon

(57) **Abstract**

Disclosed are a display apparatus and a system including the same. A 3-dimensional (3D) display apparatus includes a display unit; a video signal processor which extracts frame sync signals corresponding to a left-eye image and a right-eye image from a predetermined 3D video signal, and processes the left-eye image and the right-eye image to be alternately displayed on the display unit; and a first communication unit which communicates with an external 3D display apparatus, and transmits a display sync signal based on the extracted frame sync signal to the external 3D display apparatus so that a 3D image displayed in the external 3D display apparatus can be synchronized with order of the left-eye image and the right-eye image displayed on the display unit.

## Description

### BACKGROUND

### Field

Apparatuses and methods consistent with the exemplary embodiments relate to a display apparatus and a system including the same.

### Description of the Related Art

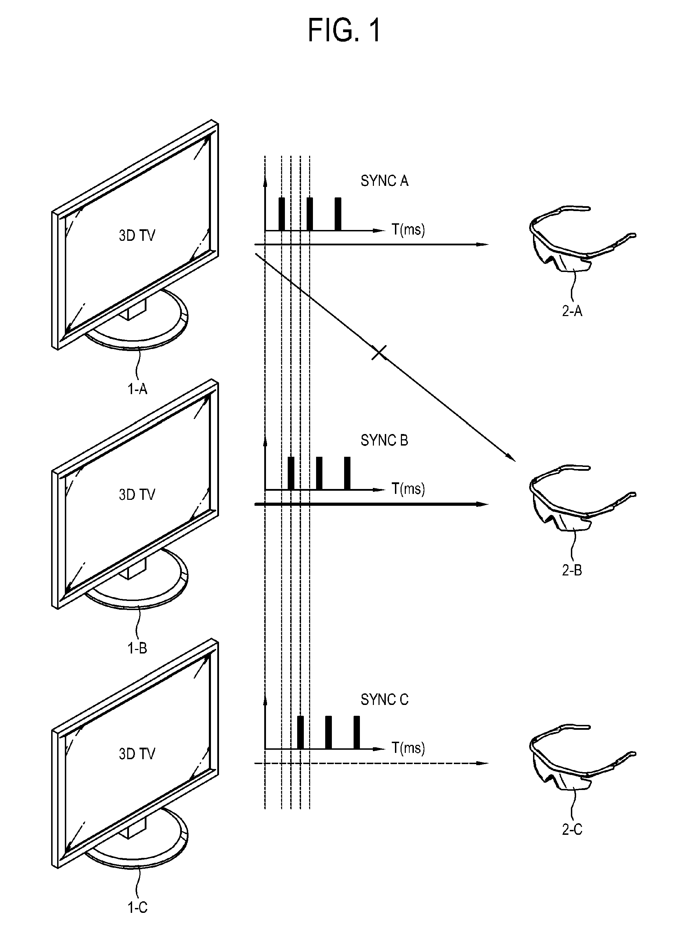

A 3-dimensional (3D) display apparatus, which allows a user to recognize a cubic effect based on binocular parallax, alternately displays a left-eye image for a user's left eye and a right-eye image for a user's right eye, and involves shutter glasses that operates in accordance with the alternate display. As the 3D display apparatus alternately displays the left-eye image and the right eye image with respect to every frame, the shutter glasses selectively open or shut off a user's two eyes. For instance, the shutter glasses open a shutter corresponding to a user's left-eye when the 3D-display apparatus displays the left-eye image, and the shutter glasses open a shutter corresponding to a user's right-eye when the 3D-display apparatus displays the right-eye image, thereby allowing a user to recognize a cubic effect of a 3D image. However, a user who employs one pair of shutter glasses cannot appreciate a plurality of different 3D images displayed in a plurality of conventional 3D display apparatuses. Referring to FIG. 1, a plurality of conventional 3D display apparatuses 1-A, 1 B and 1-C are placed in one showroom and alternately display the left-eye images and the right-eyes image in accordance with sync signals different in timing from each other, respectively. Thus, the 3D display apparatus 1-A alternately displays the left-eye image and the right-eye image in accordance with a sync A, and the sync A is transmitted as a shutter control signal to the shutter glasses 2-A. The 3D display apparatus 1-B complies with a sync B, and the 3D display apparatus 1-C complies with a sync C.

When a user wears the shutter glasses 2-A, s/he can appreciate a 3D image displayed on the 3D display apparatus 1-A, but cannot appreciate 3D images displayed on the 3D display apparatuses 1-B and 1-C. This is because the sync A, the sync B and the sync C are different in the timing from one another. Thus, one pair of shutter glasses is required to be used in making a user appreciate all the 3D images displayed on the plurality of 3D display apparatuses in a place such as a showroom where the plurality of 3D display apparatus are provided.

Also, another problem of the conventional 3D display apparatus is impossible interactive communication since the conventional 3D display apparatus employs an infrared (IR) communication method to communicate with the shutter glasses or the like external device. Thus, the conventional 3D display apparatus does not form a network with a plurality of external devices since it cannot interactively communicate with the external device.

### SUMMARY

According to the present invention there is provided an apparatus and method as set forth in the appended claims. Other features of the invention will be apparent from the dependent claims, and the description which follows.

Accordingly, one or more exemplary embodiments provide a 3D display apparatus and system so that different 3D images displayed on a plurality of 3D display apparatuses can be appreciated through one pair of shutter glasses.

Another exemplary embodiment provides a 3D display apparatus and system so that interactive communication between the 3D display apparatus and the shutter glasses is possible and the 3D display apparatus can form a network with a plurality of external devices.

The foregoing and/or other aspects may be achieved by providing a 3-dimensional (3D) display apparatus including: a display unit; a video signal processor which extracts frame sync signals corresponding to a left-eye image and a right-eye image from a predetermined 3D video signal, and processes the left-eye image and the right-eye image to be alternately displayed on the display unit; and a first communication unit which communicates with an external 3D display apparatus, and transmits a display sync signal based on the extracted frame sync signal to the external 3D display apparatus so that a 3D image displayed in the external 3D display apparatus can be synchronized with order of the left-eye image and the right-eye image displayed on the display unit.

The first communication unit may transmit the display sync signal on the basis of a radio frequency (RF) communication protocol.

The 3D display apparatus may further include a second communication unit which communicates with shutter glasses of which a left-eye part and a right-eye part can be selectively opened and shut, wherein the second communication unit sends the shutter glasses a shutter control signal for synchronizing opening/shutting of the left-eye part and the right-eye part on the basis of the frame sync signal.

The 3D display apparatus may further include a signal generator which generates the display sync signal and the shutter control signal on the basis of the frame sync signal.

The first communication unit may transmit the display sync signal to a plurality of external 3D display apparatuses.

Another aspect may be achieved by providing a 3-dimensional (3D) display apparatus including: a display unit; a video signal processor which extracts a frame sync signal corresponding to a left-eye image and a right-eye image from a predetermined 3D video signal, and processes the left-eye image and the right-eye image to be alternately displayed on the display unit; a first communication unit which communicates with an external 3D display apparatus; and a controller which controls the video signal processor to alternately display the left-eye image and the right-eye image on the display unit in sync with a display sync signal if the display sync signal for synchronizing with a 3D image displayed in the external 3D display apparatus is received from the external 3D display apparatus.

The first communication unit may receive the display sync signal on the basis of a radio frequency (RF) communication protocol.

The controller may control the video signal processor to alternately display the left-eye image and the right-eye image on the display unit by delaying the extracted frame sync signal in sync with the display sync signal if the left- and right-eye images based on the received display sync signal and the extracted frame sync signal are different in order from each other.

The 3D display apparatus may further include a second communication unit which communicates with shutter glasses of which a left-eye part and a right-eye part can be selectively opened and shut, wherein the second communication unit sends the shutter glasses a shutter control signal for synchronizing opening/shutting of the left-eye part and the right-eye part on the basis of at least one of the display sync signal and the delayed frame sync signal.

The 3D display apparatus may further include a signal generator which generates the shutter control signal on the basis of at least one of the display sync signal and the delayed frame sync signal.

Still another aspect may be achieved by providing a system for a plurality of 3-dimensional (3D) display apparatuses, the system including: a first 3D display apparatus including a first display unit, a first video signal processor which extracts first frame sync signals corresponding to a left-eye image and a right-eye image from a first 3D video signal, and processes the left-eye image and the right-eye image to be alternately displayed on the first display unit, and a first communication unit which communicates with a second 3D display apparatus, and transmits a display sync signal based on the extracted first frame sync signal to the second 3D display apparatus so that a 3D image displayed in the second 3D display apparatus can be synchronized with order of the left-eye image and the right-eye image displayed on the first display unit; and the second 3D display apparatus including a second display unit, a second video signal processor which extracts second frame sync signals corresponding to a left-eye image and a right-eye image from a second 3D video signal, and processes the left-eye image and the right-eye image to be alternately displayed on the second display unit, a third communication unit which communicates with the first 3D display apparatus, and a controller which controls the second video signal processor to alternately display the left-eye image and the right-eye image corresponding to a second 3D image on the second display unit in sync with a display sync signal if the display sync signal is received from the first 3D display apparatus.

The first communication unit and the third communication unit may receive the display sync signal on the basis of a radio frequency (RF) communication protocol.

The controller of the second 3D display apparatus may control the second video signal processor to alternately display the left-eye image and the right-eye image corresponding to the second 3D video signal on the display unit by delaying the extracted second frame sync signal in sync with the display sync signal if the left- and right-eye images based on the received display sync signal and the extracted second frame sync signal are different in order from each other.

The first 3D display apparatus may further include a second communication unit which communicates with shutter glasses of which a left-eye part and a right-eye part can be selectively opened and shut, and the second communication unit may send the shutter glasses a first shutter control signal for synchronizing opening/shutting of the left-eye part and the right-eye part on the basis of the first frame sync signal.

The second 3D display apparatus may further include a fourth communication unit which communicates with shutter glasses, and the fourth communication unit may send the shutter glasses a second shutter control signal for synchronizing opening/shutting of the left-eye part and the right-eye part on the basis of at least one of the display sync signal and the delayed second frame sync signal.

Still another aspect may be achieved by providing a display apparatus including: a communication unit which communicates with a plurality of external electronic devices; and a controller which controls the communication unit to transmit signal intensity of a pairing request signal and a critical value of signal intensity required for establishing pairing to a first electronic device and receive information about the pairing from the first electronic device if the pairing request signal is received from the first electronic device among the plurality of external electronic devices.

The communication unit may communicate with the plurality of external electronic devices on the basis of a radio frequency (RF) communication protocol.

The controller may periodically detect whether there is a pairing request signal from the first electronic device.

The information about the pairing may include at least one of information about whether the pairing is established, and information about a state of the first electronic device.

The display apparatus may further include a display unit, wherein the controller controls the display unit to display the information about the pairing thereon if receiving the information from the first electronic device.

The controller may detect whether there is a pairing request signal from a second electronic device among the plurality of external electronic devices, and establish the pairing by the same process as that of the first electronic device if the pairing request signal from the second electronic device is detected.

The controller may form a predetermined network by transmitting information about the network to the paired first and second electronic devices.

The controller may multicast predetermined data to the first and second electronic devices through the formed network.

Still another aspect may be achieved by providing an electronic device including: a communication unit which communicate with an external display apparatus; a user input unit; and a controller which controls the communication unit to transmit a pairing request signal to the display apparatus if a predetermined key input is received through the user input unit, receive signal intensity of the pairing request signal and a critical value of signal intensity required for establishing the pairing as response to the pairing request signal, and transmit information about the pairing to the display apparatus.

The information about the pairing may include at least one of information about whether the pairing is established and information about a state of the electronic device, and the controller may establish the pairing with the display apparatus if the signal intensity of the received pairing request signal is equal to or higher than the critical value of the signal intensity, and controls the communication unit to transmit the information about the pairing to the display apparatus.

The communication unit may communicate with the display apparatus on the basis of a radio frequency (RF) communication protocol.

Still another aspect may be achieved by providing a system for a display apparatus, the system including: a display apparatus including a first communication unit which communicates with a plurality of external electronic devices, and a first controller which controls the first communication unit to transmit signal intensity of a pairing request signal and a critical value of signal intensity required for establishing the pairing to a first electronic device if the pairing request signal is received from the first electronic device among the plurality of external electronic devices; and the first electronic device including a second communication unit which communicates with the display apparatus, a user input unit, a second controller which controls the second communication unit to transmit a pairing request signal to the display apparatus if a predetermined key input is received through the user input unit, receive signal intensity of the pairing request signal and a critical value of signal intensity required for establishing the pairing as response to the pairing request signal, and transmit information about the pairing to the display apparatus.

The first communication unit and the second communication unit may perform communication based on a radio frequency (RF) communication protocol.

The display apparatus may further include a display unit, and the first controller may control the display unit to display the information about the pairing thereon if receiving the information from the first electronic device.

The information about the pairing may include at least one of information about whether the pairing is established, and information about a state of the electronic device, and the second controller of the first electronic device may establish the pairing with the display apparatus if the signal intensity of the received pairing request signal is equal to or higher than the critical value of the signal intensity, and control the second communication unit to transmit the information about the pairing to the display apparatus.

The first controller may detect whether there is a pairing request signal from a second electronic device among the plurality of external electronic devices, and establish the pairing by the same process as that of the first electronic device if the pairing request signal from the second electronic device is detected.

The first controller may form a predetermined network by transmitting information about the network to the paired first and second electronic devices.

The first controller may multicast predetermined data to the first and second electronic devices through the formed network.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a schematic view of a conventional system for a 3D display apparatus;
FIG. 2 is a schematic view of a system for a 3D display apparatus according to an exemplary embodiment;
FIG. 3 is a control block diagram of a master 3D display apparatus in the system of FIG. 2;
FIG. 4 is a control block diagram of a slave 3D display apparatus in the system of FIG. 2;
FIG. 5 is a flowchart showing a control operation in the system of FIG. 2;
FIG. 6 is a schematic view of a system for a 3D display apparatus according to another exemplary embodiment;
FIG. 7 is a control block diagram of a display apparatus and an electronic device included in the system of FIG. 6;
FIG. 8 is a view showing user interface (Ul) information of the display apparatus of FIG. 7; and
FIGS. 9 and 10 are flowcharts showing a control operation in the system of FIG. 6.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

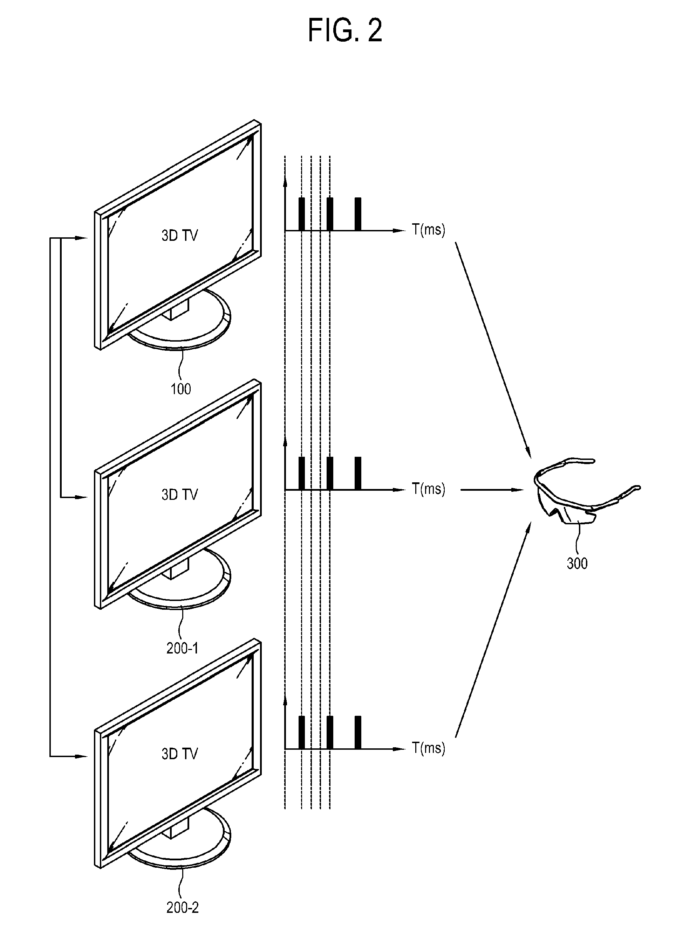

FIG. 2 is a schematic view of a system for a 3D display apparatus according to an exemplary embodiment.

As shown in FIG. 2, the system for the 3D display apparatus includes a master 3D display apparatus 100 and a plurality of slave 3D display apparatuses 200-1 and 200-2, and shutter glasses 300. Assume that the system for the 3D display apparatus is placed in a predetermined limited space such as a showroom. Further, whether which display apparatus serves as a master or a slave may be dependent on user settings.

The master 3D display apparatus 100 and the plurality of slaves 3D display apparatus 200-1 and 200-2 are displaying different 3D images. To appreciate the different 3D images displayed by the master 3D display apparatus 100 and the plurality of slaves 3D display apparatus 200-1 and 200-2 through one pair of shutter glasses 300, the master 3D display apparatus 100 transmits a display sync signal to the plurality of slave 3D display apparatuses 200-1 and 200-2. The plurality of slave 3D display apparatuses 200-1 and 200-2 alternately display the left-eye image and the right-eye image on the basis of the received display sync signal. Thus, the sync signal of the master 3D display apparatus 100 and the sync signal of the plurality of slave 3D display apparatuses 200-1 and 200-2 are synchronized with each other, so that the left-eye images and the right-eye images can be displayed in the same order, respectively. Accordingly, a user can appreciate a cubic effect of different 3D images displayed by the plurality of 3D display apparatuses 100, 200-1 and 200-2 through one pair of shutter glasses 300.

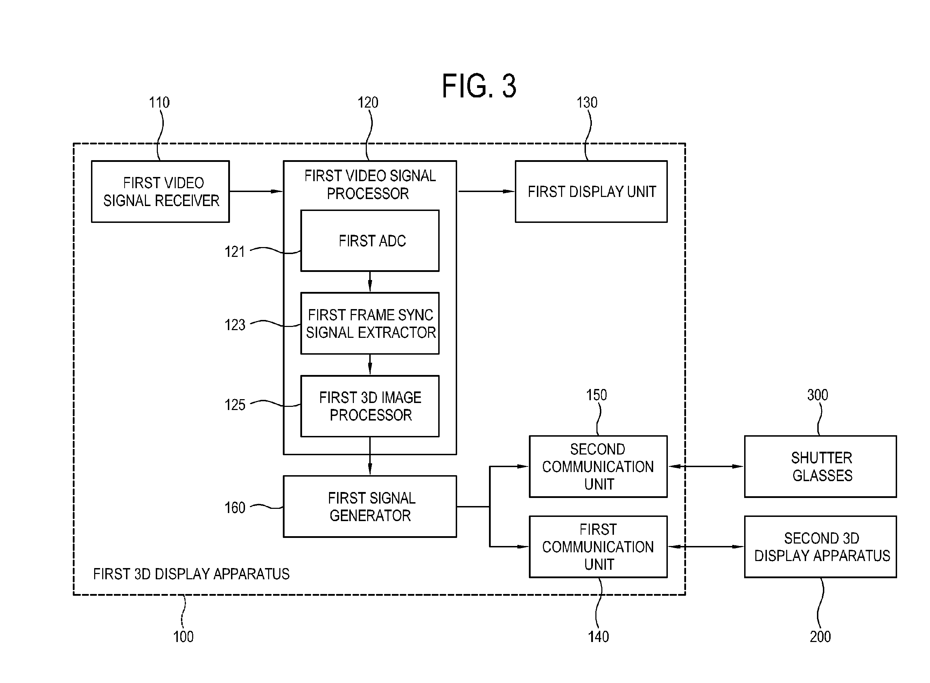

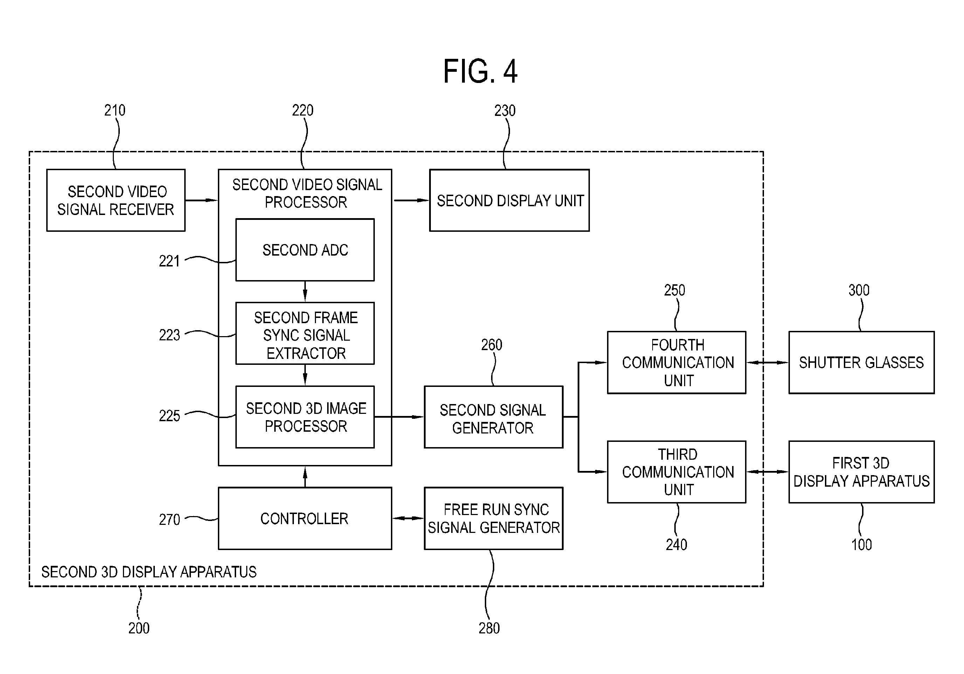

Below, the system for the 3D display apparatus of FIG. 2 will be described in detail with reference to FIGS. 3 and 4.

FIG. 3 is a control block diagram of a first 3D display apparatus in the system of FIG. 2, in which the first 3D display apparatus serves as the master 3D display apparatus in the system of FIG. 2. FIG. 4 is a control block diagram of a second 3D display apparatus in the system of FIG. 2, in which the second 3D display apparatus serves as the slave 3D display apparatus in the system of FIG. 2.

The first 3D display apparatus 100 includes a first video signal receiver 110, a first video signal processor 120, a first display unit 130, a first communication unit 140, a second communication unit 150, and a first signal generator 160.

The second 3D display apparatus 200 includes a second video signal receiver 210, a second video signal processor 220, a second display unit 230, a third communication unit 240, a fourth communication unit 250, a signal generator 260, a free run sync signal generator 280, and a controller 270 controlling them.

The first video signal receiver 110 and the second video signal receiver 210 receive predetermined video signals from an external video source (not shown). The video source includes an external personal computer (PC, not shown), a server (not shown) providing a video signal through a network, a transmitter (not shown) of a broadcasting station capable of transmitting a broadcasting signal through airwaves or a cable, etc. The first video signal receiver 110 and the second video signal receiver 210 may receive a 2D video signal or a 3D video signal. In accordance with user settings, each of the first and second 3D display apparatuses 100 and 200 may convert a 2D video signal received by the first and second video signal receivers 110 and 210 into a 3D video signal, and display it as a 3D image.

The video signal received by the first video signal receiver 110 may be different from the video signal received by the second video signal receiver 210.

The first video signal processor 120 and the second video signal processor 220 may respectively extract a first frame sync signal and a second frame sync signal corresponding to a left-eye image and a right-eye image from a predetermined 3D video signal, and alternately display the left-eye image and the right-eye image on the first display unit 130 and the second display unit 230.

The first video signal processor 120 includes a first analog/digital converter (ADC) 121, a first frame sync signal extractor 123, and a first 3D image processor 125. The second video signal processor 220 includes a second ADC 221, a second frame sync signal extractor 223, and a second 3D image processor 225.

The first ADC 121 and the second ADC 221 serve to convert analog video signals received by the first and second video signal receivers 110 and 220 into a digital video signal. The first frame sync signal extractor 123 and the second frame sync signal extractor 223 extract a first frame sync signal and a second frame sync signal from the video signal, respectively. The first and second frame sync signals include V sync signals. If the received video signals are 2D video signals, the first 3D image processor 125 and the second 3D image processor 225 convert them into a 3D video signal. If the received video signals are 3D video signals, the first 3D image processor 125 and the second 3D image processor 225 may adjust cubic effects of the 3D video signals.

The first and second video signal processors 120 and 220 may perform decoding and encoding corresponding to various video formats, de-interlacing, frame refresh rate conversion, scaling, noise reduction for enhancing picture quality, detail enhancement, line scanning, or the like process in addition to the foregoing processes.

The first display unit 130 alternately displays a left-eye image and a right-eye image corresponding to a 3D video signal processed by the first video signal processor 120. Also, the second display unit 230 alternately displays a left-eye image and a right-eye image corresponding to a 3D video signal processed by the second video signal processor 220.

The first and second display units 130 and 230 include display panels (not shown) for displaying an image, and panel drivers (not shown). The display panel (not shown) may include a liquid crystal display (LCD) panel having a liquid crystal layer, an organic light emitting diode (OLED) panel having an organic light emitting layer, a plasma display panel (PDP), etc.

The first communication unit 140 communicates with the third communication unit 240 of the second 3D display apparatus 200 serving as a slave in the system of FIG. 2. The first communication unit 140 may communicate with a plurality of second 3D display apparatuses. The first communication unit 140 and the third communication unit 240 may include RF communication modules and perform RF communication. For example, the first communication unit 140 and the third communication unit 240 may include Bluetooth communication modules or Zigbee communication modules, and perform communication in accordance with Bluetooth communication protocols or Zigbee communication protocols. The first communication unit 140 transmits a display sync signal based on the extracted first frame sync signal to the third communication unit 240 of the second 3D display apparatus 200 so that the 3D image displayed on the second 3D display apparatus 200 can be synchronized with the order of the left-eye image and the right-eye image displayed on the first display unit 130. The display sync signal is generated by the first signal generator 160.

The second communication unit 150 and the fourth communication unit 250 communicate with the shutter glasses of which a left-eye part and a right-eye part are selectively opened and shut. The second communication unit 150 and the fourth communication unit 250 are also provided with the RF communication modules and capable of performing RF communication with the shutter glasses. For example, the second communication unit 150 and the fourth communication unit 250 may include Bluetooth communication modules or Zigbee communication modules, and perform communication with the shutter glasses 300 in accordance with Bluetooth communication protocols or Zigbee communication protocols.

If the first to fourth communication units 140, 150, 240 and 250 have to perform the RF communication, a pairing process is needed for the RF communication. Thus, communication between the first communication unit 140 and the third communication unit 240 and communication between the second communication unit 150 or the fourth communication unit 250 and the shutter glasses 300 can be implemented after the pairing is first established by the pairing process. Although the RF communications are performed by all of them, the communications are not interfered with each other.

The second communication unit 150 may send the shutter glasses 300 a first shutter control signal for synchronizing opening/shutting of the left-eye part and the right-eye part of the shutter glasses 300 on the basis of the first frame sync signal extracted by the first frame sync signal extractor 123.

The fourth communication unit 250 may send the shutter glasses 300 a second shutter control signal for synchronizing opening/shutting of the left-eye part and the right-eye part of the shutter glasses 300 on the basis of the display sync signal received from the third communication unit 140. The second shutter control signal is based on the second frame sync signal delayed under control of the controller 270 and transmitted to the shutter glasses 300. This will be described in detail together with description about the controller 270.

The first signal generator 160 may generate a display sync signal and a first shutter control signal on the basis of the first frame sync signal extracted by the first frame sync signal extractor 123. The first signal generator 160 may generate a display sync signal and a first shutter control signal in accordance with a communication protocol of the first and second communication units 140 and 150 on the basis of the fist frame sync signal.

The second signal generator 260 may generate a second shutter control signal in accordance with the display sync signal and the delayed second frame sync signal. This will be described in detail together with description about the controller 270.

The second 3D display apparatus 200 of FIG. 4 may further include the controller 270 and the free run sync signal generator 280 in addition to the foregoing elements.

If receiving the display sync signal from the first 3D display apparatus 100 through the third communication unit 240, the controller 270 controls the second video signal processor 220 so that a left-eye image and a right-eye image of a predetermined 3D video signal received through the second video signal receiver 210 in response to the display sync signal can be alternately displayed on the second display unit 230.

The controller 270 compares the display sync signal with the second frame sync signal extracted by the second frame sync signal extractor 223 if receiving the display sync signal. As a result of comparing two sync signals, if it is determined that the order of the left-eye images and the right-eye images in the display sync signal is different from the order of the left-eye images and the right-eye images in the second from sync signal, the controller 270 delays the second frame sync signal in response to the display sync signal and controls the second video signal processor 220 so that the left-eye image and the right-eye image can be alternately displayed on the second display unit 230. Thus, even though a 3D image displayed on the first display unit 130 and a 3D image displayed on the second display unit 230 are based on different video signals received from different video sources, the respective left- and right-eye images can be in the same order.

Under control of the controller 270, the second signal generator 260 can generate the second shutter control signal on the basis of at least one of the display sync signal received from the first 3D display apparatus 100 and the delayed second frame sync signal.

Meanwhile, if the second 3D display apparatus 200 cannot receive the display sync signal from the first 3D display apparatus 100 even though the second 3D display apparatus 200 is set up as a slave device, the free run sync signal generator 280 generates a free run sync signal under control of the controller 270. The generated free run sync signal can compensate for the absence of the display sync signal.

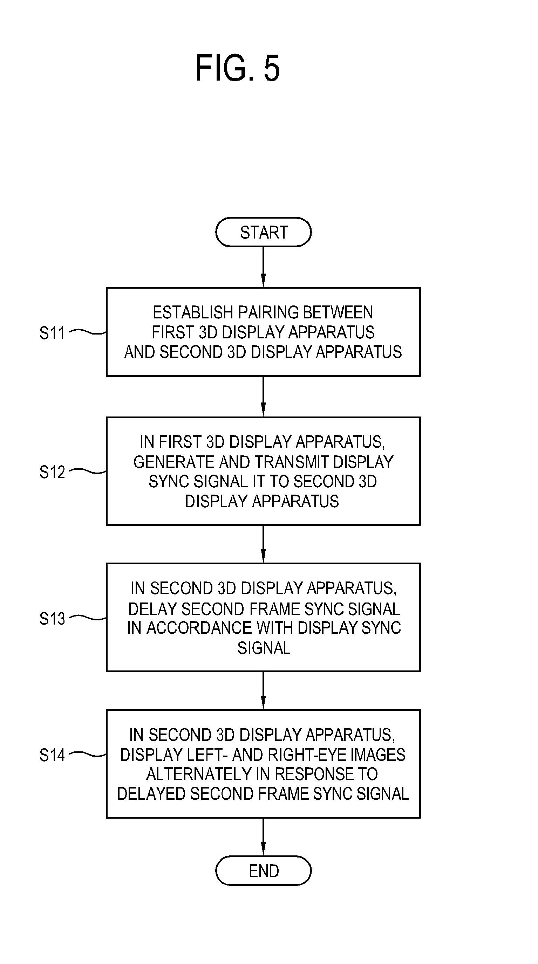

FIG. 5 is a flowchart showing a control operation in the system of FIG. 2.

The first 3D display apparatus 100 is set up as a master device, and the second 3D display apparatus 200 is set up as a slave device. At this time, there may be a plurality of second 3D display apparatuses.

The first 3D display apparatus and the second 3D display apparatus undergo the pairing process to thereby establish the pairing therebetween (S11). The pairing may be achieved by a generally well-known pairing process.

If the pairing is established, the first 3D display apparatus extracts a first frame sync signal of a first 3D video signal being currently displayed, generates a display sync signal on the basis of the first frame sync signal, and transmits it to the second 3D display apparatus (S12).

The second 3D display apparatus, which receives the display sync signal, extracts a second frame sync signal of a second 3D video signal being currently displayed, and compares it with the display sync signal. As a result of comparison, if it is determined that the order of the left-eye images and the right-eye images in the display sync signal is different from the order of the left-eye images and the right-eye images in the second from sync signal, the second 3D display apparatus delays the second frame sync signal in response to the display sync signal (S13). In accordance with the delayed second frame sync signal, the left-eye image and the right-eye image of the second 3D video signal are alternately displayed on the second 3D display apparatus (S14).

Also, the first 3D display apparatus 100 generates the first shutter control signal based on at least one of the display sync signal and the first frame sync signal, and transmits it to the shutter glasses 300.

Also, the second 3D display apparatus 200 generates the second shutter control signal based on at least one of the display sync signal and the delayed second frame sync signal, and transmits it to the shutter glasses 300.

Accordingly, a user can appreciate a first 3D image displayed on the first 3D display apparatus 100 and a second 3D image displayed on the second 3D display apparatus 200 without confusion through one pair of shutter glasses 300.

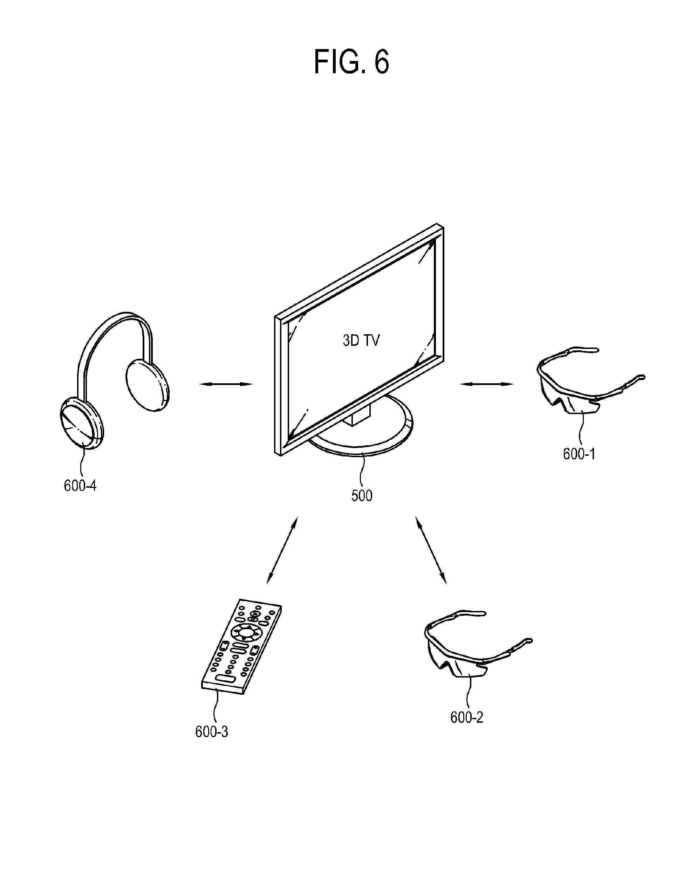

FIG. 6 is a schematic view of a system for a 3D display apparatus according to another exemplary embodiment.

The system for the 3D display apparatus of FIG. 6 includes a display apparatus 500 and a plurality of electronic devices 600-1, ..., 600-4. In this exemplary embodiment, a process of establishing pairing based on interactive communication between the display apparatus 500 and the electronic device 600, and forming a network after establishing the pairing will be described.

A conventional display apparatus performs communication with an external device through an IR communication method, and thus it is just possible to only transmit only control data from the display apparatus to the external device. Thus, there is a limit to request a predetermined function of the external device or check the state of the external device.

On the other hand, referring to FIG. 6, the display apparatus 500 and the external electronic device 600 can perform communication based on an RF communication method. The interactive communication is enabled by the RF communication, so that the display apparatus 500 can not only request a predetermined function of the external electronic device 600 but also check the state of the external electronic device 600.

The display apparatus 500 may include a display apparatus having the Bluetooth communication module or the Zigbee communication module (e.g., digital television (DTV), internet protocol television (IPTV), 3-dimensional television (3DTV), or the like TV; a smart phone, a portable multimedia player (PMP), a pocket personal computer (PC), or the like personal digital assistant (PDA); a tablet PC, a Netbook, or the like PC).

The external electronic device 600 is an electronic device capable of performing the RF communication with the display apparatus 500, and may include shutter glasses 600-1, 600-2, a remote controller 600-3, a wireless headset 600-4, etc.

If pairing between the display apparatus 500 and the external electronic device 600 is established by pairing request from the external electronic device 600, the external electronic device 600 transmits information about the pairing to the display apparatus 500 so that information about the state of the electronic device 600 can be transmitted to the display apparatus 500. The display apparatus 500 can display the received information about the pairing on a third display unit 530 so that a user can ascertain the information. The display apparatus 500 may be paired with a plurality of external electronic devices 600.

If the paring between the display apparatus 500 and the plurality of external electronic devices 600-1, 600-2, 600-3 and 600-4, the display apparatus 500 can form a network with the plurality of paired electronic devices since the interactive communication is possible, and multicast predetermined data through the network.

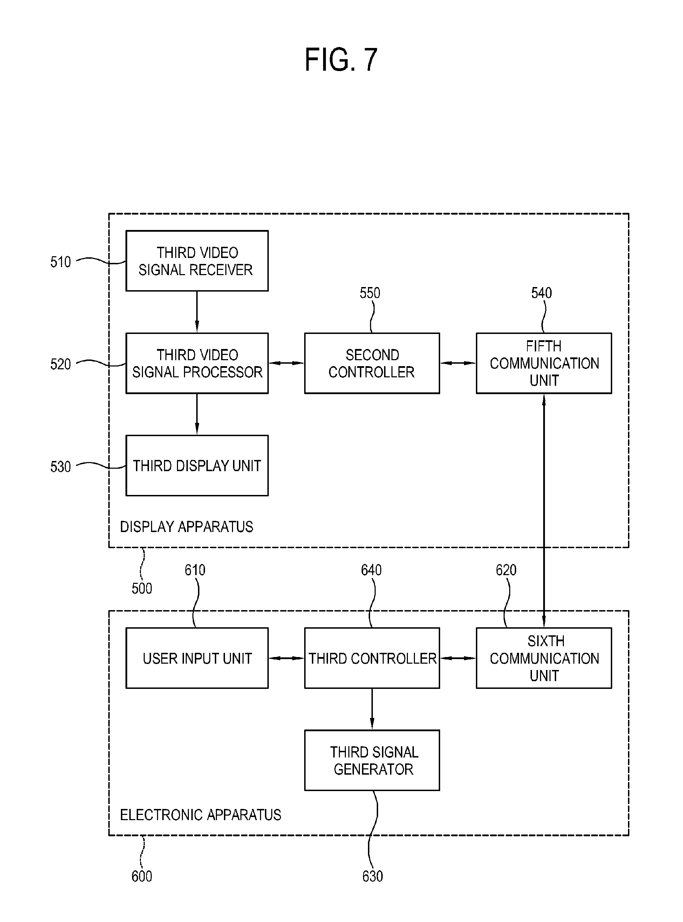

Below, the display apparatus 500 and the electronic device 600 of FIG. 6 will be described in detail with reference to FIG. 7.

As shown in FIG. 7, the display apparatus 500 includes a third video signal receiver 510, a third video signal processor 520, a third display unit 530, a fifth communication unit 540 and a second controller 550 controlling them.

In this exemplary embodiment, a 3D TV will be described as the display apparatus 500, but not limited thereto.

The third video signal receiver 510 may receive a predetermined video signal from an external video source (not shown), and may receive either of a 2D video signal or a 3D video signal.

The third video signal processor 520 processes a video signal received by the third video signal receiver 510 to be displayed on the third display unit 530. If the display apparatus 500 is achieved by the 3D TV and a user selects a 3D image view, the third video signal processor 520 may process the 2D video signal to be converted into the 3D video signal and displayed as a 3D image even if the received video signal is the 2D video signal. Also, the third video signal processor 520 may perform a generally known video signal process such as analog/digital conversion (ADC), decoding and encoding corresponding to various video formats, de-interlacing, frame refresh rate conversion, scaling, noise reduction for enhancing picture quality, detail enhancement, line scanning, etc.

The third display unit 530 may display an image corresponding to a video signal processed by the third video signal processor 520. Also, under control of the second controller 550, if information about pairing is received from the external electronic device 600, the received information is displayed on the third display unit 530. The third display unit 530 includes a display panel (not shown) for displaying an image, and a panel driver (not shown). The display panel (not shown) may include a liquid crystal display (LCD) panel having a liquid crystal layer, an organic light emitting diode (OLED) panel having an organic light emitting layer, a plasma display panel (PDP), etc.

The fifth communication unit 540 may communicates with the external electronic device 600, and include the RF communication module capable of performing communication based on the RF communication method. The RF communication module may include a Bluetooth communication modules or a Zigbee communication module.

If receiving a pairing request signal from a first electronic device among the plurality of external electronic devices, the second controller 550 controls the fifth communication unit 540 to transmit signal intensity of the received pairing request signal and a critical value of the signal intensity required for the pairing to the first electronic device, and receive information about the pairing from the first electronic device.

Referring to FIG. 6, assume that the display apparatus 500 is a 3D TV, and the first electronic device among the plural external electronic devices 600 is shutter glasses 600-1.

The first electronic device 600-1 transmits a pairing request signal to the display apparatus 500. The pairing request signal is a signal with predetermined received signal strength indicator (RSSI) intensity, and the first electronic device 600-1 may periodically transmit the pairing request signal to the display apparatus 500.

Under control of the second controller 550, the display apparatus 500 periodically detects whether there is the pairing request signal from the external electronic device. Accordingly, if the pairing request signal from the first electronic device 600-1 is detected, the second controller 550 measures the RSSI intensity of the pairing request signal. The second controller 550 controls the fifth communication unit 540 to transmit both the measured RSSI intensity and the critical value for the signal intensity required for establishing the pairing to the first electronic device 600-1, and receive information about the pairing from the first electronic device 600-1 in accordance with the above transmission.

The information about the pairing may include at least one of information about whether the pairing is established, and information about the state of the first electronic apparatus 600-1.

The information about whether the pairing is established means information about whether the pairing is successful. Also, the information about the state of the first electronic device 600-1 may include the kind of the first electronic device 600-1, identification information of the first electronic device 600-1, the current settings of the first electronic device 600-1, or etc.

The first electronic device 600-1 receives the measured RSSI signal intensity value of the paring request signal and the critical value of the signal intensity required for establishing the pairing from the display apparatus 500, and compares two values. If the RSSI signal intensity of the request signal is equal to or higher than the critical value, the first electronic device 600-1 completes the paring with the display apparatus 500, and transmits information about pairing success, and the identification information and the state information about the first electronic device 600-1 to the display apparatus 500.

The second controller 550 can display the information received from the first electronic device 600-1 on the third display unit 530. The second controller 550 may display the information received from the first electronic device 600-1 as a user interface (Ul) on the third display unit 5320, and thus the display apparatus 500 may further include a Ul generator (not shown).

Meanwhile, the display apparatus 500 can be paired with the plurality of external electronic devices 600. Thus, when the pairing with the first electronic device 600-1 is completely established, the display apparatus 500 periodically detects where there is the pairing request signal from other electronic devices 600-2, 600-3 and 600-4. As a result of detection, if there is the pairing request signal from the second electronic device 600-2, the same process as the first electronic device 600-1 is performed to establish the pairing.

Referring back to FIG. 6, the display apparatus 500 may establish the pairing with all the external electronic devices 600-1, 600-2, 600-3 and 600-4. If the pairing is completely established, the second controller 550 transmits information about a predetermined network to the completely paired external electronic devices 600-1, 600-2, 600-3 and 600-4, thereby forming a predetermined network. For example, a star network may be formed among the display apparatus 500 and the plurality of external electronic devices 600-1, 600-2, 600-3 and 600-4.

Thus, if a predetermined network is formed, the second controller 550 may multicast predetermined data to the plurality of external electronic devices 600-1, 600-2, 600-3 and 600-4 through the network.

Referring to FIG. 7, an electronic device 600 includes a user input unit 610, a sixth communication unit 620, a third signal generator 630 and a third controller 640 controlling them.

The user input unit 610 is a user interface for receiving a user's selection, which receives a user's selection related to a function or an operation of the electronic device 600. The user input unit 610 may include at least one key button as a hot key, and may be achieved by a control panel provided in the electronic device 600. The user input unit 610 may be configured with a plurality of physical function keys, for example, a power on/off key, a menu key, arrow keys, volume keys, letter keys, numeral keys, or the like minimum buttons.

The sixth communication unit 620 may communicates with the fifth communication unit 540 of the display apparatus 500, and include the RF communication module. The RF communication module may include a Bluetooth communication modules or a Zigbee communication module.

The third signal generator 630 generates a paring request signal with predetermined RSSI signal intensity under control of the third controller 640.

The third controller 640 controls the third signal generator 630 to generate the pairing request signal having the predetermined RSSI signal intensity and transmit it to the display apparatus 500 if a predetermined key input is received through the user input unit 610. The third controller 640 controls the sixth communication unit 620 so that the pairing request signal can be successively transmitted at predetermined intervals within a predetermined RF communication band. The third controller 640 may be configured to transmit a pairing request signal until receiving a response to the pairing request signal from the display apparatus 500.

If the display apparatus 500 transmits the RSSI signal intensity value of the pairing request signal and the critical value of the signal intensity required for establishing the paring in response to the paring request signal from the electronic device 600, the third controller 630 of the electronic device 600 compares the two received values. As a result of comparison, if the RSSI signal intensity of the request signal is equal to or higher than the critical value, the third controller 630 completes the paring with the display apparatus 500, and controls the six communication unit 620 to transmit information about pairing success, and the identification information and the state information about the first electronic device 600-1 to the display apparatus 500.

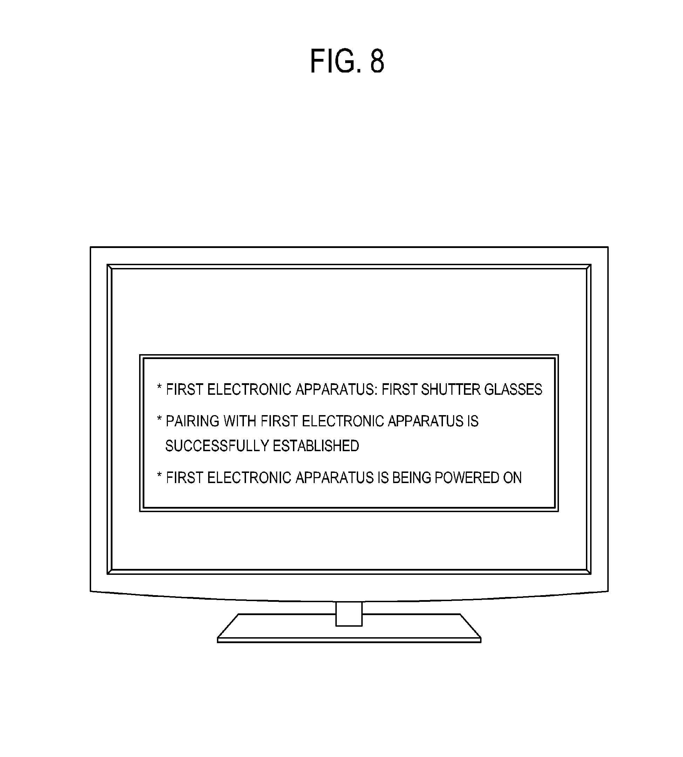

FIG. 8 is a view showing user interface (Ul) information of the display apparatus of FIG. 7. As shown therein, if the display apparatus 500 receives the information about the pairing success, and the identification information and state information of the first electronic device 600-1 from the electronic device 600, the display apparatus 500 displays it on the third display unit 530. Referring to FIG. 8, whether the current pairing is successfully established, the kind of paired first electronic device, and the current state of power-on are displayed as Ul information.

As mentioned above, the display apparatus 500 can be paired with a plurality of external electronic devices 600, so that the received information about the pairing from the paired external electronic device 600 can be displayed as the UI information whenever the pairing with the external electronic device 600 is established.

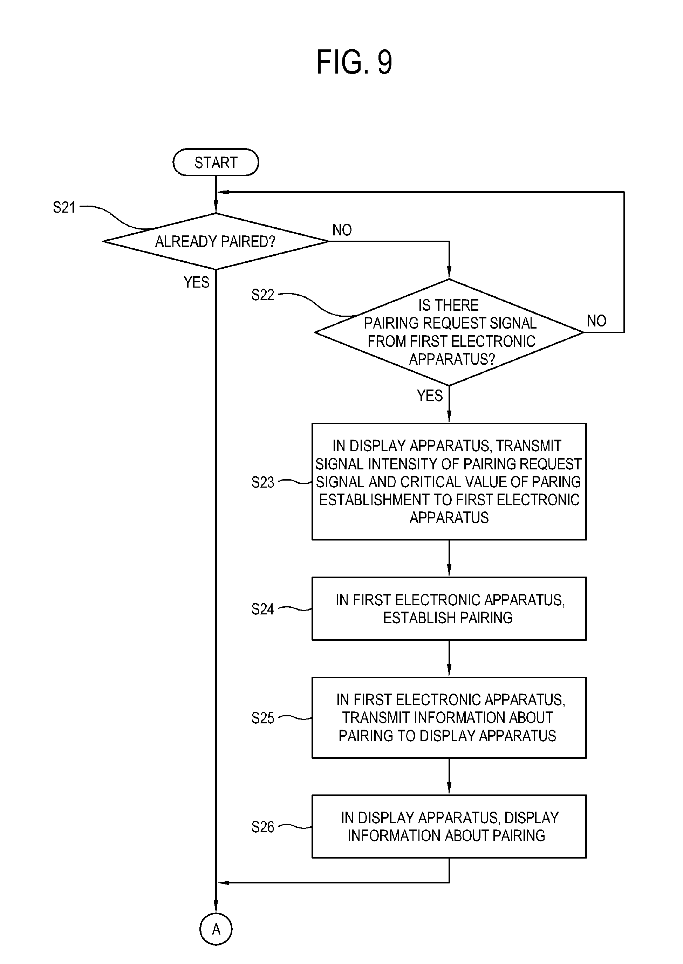

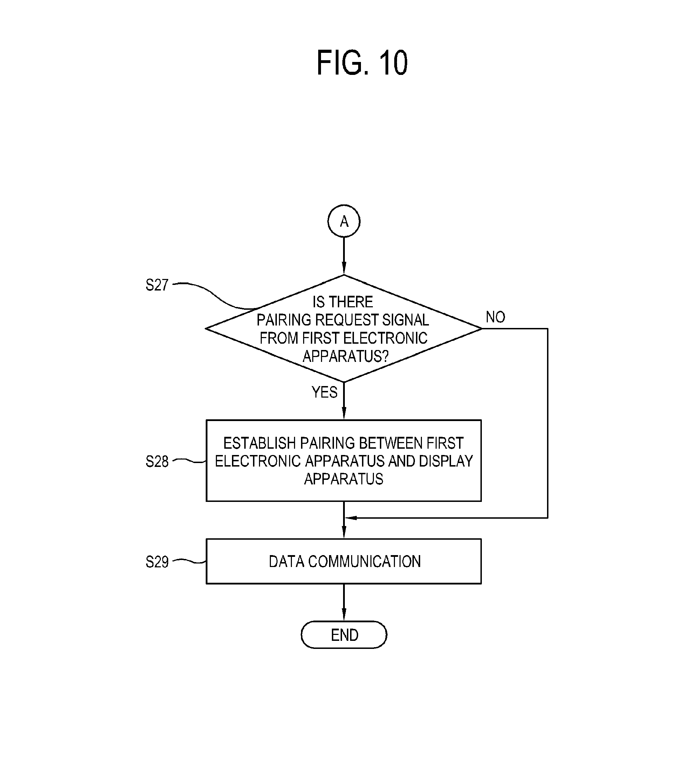

FIGS. 9 and 10 are flowcharts showing a control operation in the system of FIG. 6.

If the pairing between the display apparatus 500 and the external electronic device have already been established, the identification information (e.g., medium access control (MAC) address or Bluetooth device (BD) address) of the paired external electronic apparatus is set up in the fifth communication unit 540 of the display apparatus 500. Thus, the display apparatus 500 can ascertain whether the paring with the external electronic device is established (S21).

The display apparatus 500 periodically detects whether there is the paring request signal from the external electronic device. If the display apparatus 500 receives the pairing request signal from the unpaired first electronic device 600-1 (S22), the display apparatus 500 measures the RSSI intensity of the received pairing request signal. The measured RSSI signal intensity of the pairing request signal and the critical value of the signal intensity required for establishing the pairing are transmitted to the first electronic device 600-1 (S23). The first electronic device 600-1 compares the received RSSI signal intensity of the pairing request signal and the critical value of the signal intensity required for establishing the pairing, and completes the pairing with the display apparatus 500 if the RSSI signal intensity of the pairing request signal is equal to or higher than the critical value (S24).

The first electronic device 600-1 sends the display apparatus 500 the information about the pairing such as whether the pairing is successfully established after completely establishing the paring, the identification information of the first electronic device, and/or information about the state (S25).

The display apparatus 500 displays the received information about the pairing from the first electronic device 600-1 on the third display unit 530 (S26).

If the pairing between the display apparatus 500 and the first electronic device 600-1 is completely paired, the display apparatus 500 periodically detects whether there is a pairing request signal from other external electronic devices. If the display apparatus 500 receives the pairing request signal from the second electronic device 600-2 (S27), the display apparatus 500 and the second electronic device 600-2 perform the same process as the operations of S23 to S26, thereby establishing the pairing (S28).

After paired, data communication is possible between the display apparatus 500 and the first electronic device 600-1 or the second electronic device 600-2 (S29). Through the data communication, the display apparatus 500 transmit information about a predetermined network to the first electronic device 600-1 and the second electronic device 600-2, so that the predetermined network can be formed. Thus, if a predetermined network is formed among the display apparatus 500, the first electronic device 600-1 and the second electronic device 600-2, the display apparatus 500 can multicast predetermined data to the first electronic device 600-1 and the second electronic device 600-2.

As described above, there are provided a 3D display apparatus and system so that different 3D images displayed on a plurality of 3D display apparatuses can be appreciated through one pair of shutter glasses.

Also, there are provided a 3D display apparatus and system so that interactive communication between the 3D display apparatus and the shutter glasses is possible and the 3D display apparatus can form a network with a plurality of external devices.

Although a few exemplary embodiments have been shown and described, it will be appreciated by those skilled in the art that changes may be made in these exemplary embodiments without departing from the principles of the invention, the scope of which is defined in the appended claims and their equivalents.

## Claims

1. A 3-dimensional (3D) display apparatus comprising:
a display unit;
a video signal processor which extracts frame sync signals corresponding to a left-eye image and a right-eye image from a 3D video signal, and processes the left-eye image and the right-eye image to be alternately displayed on the display unit; and
a first communication unit which communicates with an external 3D display apparatus, and transmits a display sync signal based on the extracted frame sync signals to the external 3D display apparatus so that a 3D image displayed in the external 3D display apparatus can be synchronized so that the left-eye image and the right-eye image are displayed on the display unit in order.

2. The 3D display apparatus according to claim 1, wherein the first communication unit transmits the based on a radio frequency (RF) communication protocol.

3. The 3D display apparatus according to claims 1 or 2, further comprising a second communication unit which communicates with shutter glasses of which a left-eye part and a right-eye part can be selectively opened and shut,
wherein the second communication unit sends the shutter glasses a shutter control signal for synchronizing opening/shutting of the left-eye part and the right-eye part on based on the extracted frame sync signals.

4. The 3D display apparatus according to one of claims 1 to 3, further comprising a signal generator which generates the display sync signal and the shutter control signal based on the frame sync signals.

5. The 3D display apparatus according to one of claims 1 to 4, wherein the first communication unit transmits the display sync signal to a plurality of external 3D display apparatuses.

6. A 3-dimensional (3D) display apparatus comprising:
a display unit;
a video signal processor which extracts a frame sync signal corresponding to a left-eye image and a right-eye image from a predetermined 3D video signal, and processes the left-eye image and the right-eye image to be alternately displayed on the display unit;
a first communication unit which communicates with an external 3D display apparatus; and
a controller which controls the video signal processor to alternately display the left-eye image and the right-eye image on the display unit in sync with a display sync signal for synchronizing with a 3D image displayed in the external 3D display apparatus received from the external 3D display apparatus.

7. The 3D display apparatus according to claim 6, wherein the first communication unit receives the display sync signal based on a radio frequency (RF) communication protocol.

8. The 3D display apparatus according to claims 6 or 7, wherein the controller controls the video signal processor to alternately display the left-eye image and the right-eye image on the display unit by delaying the extracted frame sync signal in sync with the display sync signal if the left- and right-eye images based on the received display sync signal and the extracted frame sync signal are different in order from each other.

9. The 3D display apparatus according to one of claims 6 to 8, further comprising a second communication unit which communicates with shutter glasses of which a left-eye part and a right-eye part can be selectively opened and shut,
wherein the second communication unit sends the shutter glasses a shutter control signal for synchronizing opening/shutting of the left-eye part and the right-eye part based on at least one of the display sync signal and the delayed frame sync signal.

10. The 3D display apparatus according to claim one of claims 6 to 9, further comprising a signal generator which generates the shutter control signal based on at least one of the display sync signal and the delayed frame sync signal.

11. A control method of a 3-dimensional (3D) display apparatus comprising:
Extracting, by a video signal processor, frame sync signals corresponding to a left-eye image and a right-eye image from a 3D video signal;
Processing, by a video signal processor, processes the left-eye image and the right-eye image to be alternately displayed on a display unit; and
Communicating and transmitting, by a communication unit, a display sync signal based on the extracted frame sync signals to an external 3D display apparatus so that a 3D image displayed in the external 3D display apparatus can be synchronized so that the left-eye image and the right-eye image are displayed on the display unit in order.

12. The control method according to claim 11,
the display sync signal is transmitted based on a radio frequency communication protocol.

13. A control method of a 3-dimensional (3D) display apparatus comprising:
Extracting, by a video signal processor, a frame sync signal corresponding to a left-eye image and a right-eye image from a 3D video signal, and processing the left-eye image and the right-eye image to be alternately displayed on a display unit;
Receiving, by a first communication unit, a display sync signal from an external 3D display apparatus; and
Controlling, by a controller, the video signal processor to alternately display the left-eye image and the right-eye image on the display unit in sync with the display sync signal for synchronizing with a 3D image displayed in the external 3D display apparatus.

14. The control method according to claim 13,
The controlling comprises controlling the video signal processor to alternately display the left-eye image and the right-eye image on the display unit by delaying the extracted frame sync signal in sync with the display sync signal if the left- and right-eye images based on the received display sync signal and the extracted frame sync signal are different in order from each other.

15. The control method according to claims 13 or 14, the display sync signal is transmitted based on a radio frequency communication protocol.
